# EUROPEAN PATENT APPLICATION

(11) **EP 4 696 451 A1**
(43) Date of publication of application: **18.02.2026**
(21) Application number: 24819608.1
(22) Date of filing: 07.06.2024
(51) Int. Cl.: B23K 37/04, B23K 26/21, B23K 26/066, H01M 50/538

(54) **WELDING MASK JIG**

(30) Priority: 09.06.2023 KR 20230074316; 05.06.2024 KR 20240073997
(71) Applicant: LG Energy Solution, Ltd., Seoul 07335 (KR)
(72) Inventor: KIM, Won Joo, Daejeon 34122 (KR); YOON, U Jin, Daejeon 34122 (KR); KIM, Youn Joong, Daejeon 34122 (KR); JI, Sang Gu, Daejeon 34122 (KR); KIM, Jung Jin, Daejeon 34122 (KR); BAEK, Min Gun, Daejeon 34122 (KR)
(74) Representative: Goddar, Heinz J.
(86) International application number: PCT/KR2024/007798
(87) International publication number: WO 2024/253457

(57) **Abstract**

A mask jig for welding according to an embodiment of the present disclosure may include a body; a receiving groove recessed to a predetermined depth on one side of the body and configured to accommodate a current collector plate; and at least one through hole formed through the other side of the body to the receiving groove and configured to allow a laser beam to enter the current collector plate located in the receiving groove. The receiving groove may include a first groove communicating with the through hole; and a second groove extending radially outward from the first groove.

## Description

### TECHNICAL FIELD

### CROSS-REFERENCE TO RELATED APPLICATION

The present application claims priority to Korean Patent Application No. 10-2023-0074316 filed on June 9, 2023 and Korean Patent Application No. 10-2024-0073997 filed on June 5, 2024 in the Republic of Korea, the disclosures of which are incorporated herein by reference.

### TECHNICAL FIELD

The present disclosure relates to a mask jig for welding, and more specifically, to a mask jig used for welding a current collector plate.

### BACKGROUND ART

Secondary batteries have high applicability according to product groups and electrical characteristics such as high energy density, and thus are commonly applied not only to portable devices but also to electric vehicles (EVs), hybrid electric vehicles (HEVs), and the like driven by electric power sources.

Such secondary batteries are attracting attention as a new energy source to improve eco-friendliness and energy efficiency in that they have not only a primary advantage of dramatically reducing the use of fossil fuels, but also no by-products generated from the use of energy.

Secondary batteries widely used at present include lithium-ion batteries, lithium polymer batteries, nickel cadmium batteries, nickel hydrogen batteries, nickel zinc batteries, and the like. A plurality of batteries may also be connected in series and/or in parallel to configure a battery module or a battery pack. The number of batteries included in the battery module or in the battery pack and the type of electrical connection may be variously set according to the required output voltage and/or the demanded charge/ discharge capacity.

As types of secondary battery cells, cylindrical, prismatic, and pouch-type batteries are known. In the case of a cylindrical battery, an insulating separator is interposed between a positive electrode and a negative electrode, and these are wound to form a jelly-roll type electrode assembly, which is then inserted into a battery can together with the electrolyte to form a battery. The battery can and the cap sealing the opening of the battery can may have opposite polarities, and may function as a positive electrode terminal and a negative electrode terminal, respectively. For example, the positive electrode terminal may be the cap and the negative electrode terminal may be the battery can. However, the opposite configuration is also possible.

Electrode tabs may be provided at both ends of the electrode assembly in the axial direction, a current collector plate may be welded to the electrode tabs, and the electrode tabs may be electrically connected to the battery can and the cap through the current collector plate. And, it is well known that a mask jig may be used when welding the current collector plate and the electrode tab.

### SUMMARY

### TECHNICAL PROBLEM

The present disclosure is directed to providing a mask jig for welding capable of performing laser welding on a current collector plate including a lead portion.

The present disclosure is also directed to providing a mask jig for welding that allows the lead portion of the current collector plate to be bent at a preset position.

### TECHNICAL SOLUTION

A mask jig for welding according to an embodiment of the present disclosure may include a body; a receiving groove recessed to a predetermined depth on one side of the body and configured to accommodate a current collector plate; and at least one through hole formed through the other side of the body to the receiving groove and configured to allow a laser beam to enter the current collector plate located in the receiving groove. The receiving groove may include a first groove communicating with the through hole; and a second groove extending radially outward from the first groove.

A protrusion configured to press the lead portion of the current collector plate may be formed at the inner end of the second groove.

The protrusion may be formed to be parallel to a width of the second groove.

The length of the protrusion may be more than half of the width of the second groove.

The end of the protrusion may be located on the same plane as the inner surface of the first groove, or may protrude further than the inner surface of the first groove.

The inner end of the second groove may be located inside the inner circumference of the first groove.

The first groove may be configured to accommodate a body of the current collector plate welded to the electrode assembly, and the second groove may be configured to accommodate the lead portion that extends to protrude in a radially outward direction of the body of the current collector plate.

The second groove may be formed deeper than the first groove.

The second groove may include a section in which its depth increases as the distance from the inner end of the second groove increases.

The inner end of the second groove may be located on the same plane as the inner surface of the first groove, or may protrude further than the inner surface of the first groove.

The outer end of the second groove may be open.

### ADVANTAGEOUS EFFECTS

According to the preferred embodiment of the present disclosure, the receiving groove of the mask jig may include a second groove corresponding to the lead portion of the current collector plate. As a result, during the welding process, the lead portion of the current collector plate may not interfere with the body of the mask jig.

The protrusion formed in the second groove of the mask jig or the inner end of the second groove may press the lead portion of the current collector plate. As a result, since the lead portion may be bent at an accurate position, processability may be improved.

Additionally, there is an advantage of forming a bending line in the lead portion during the welding process using the mask jig without a separate process of forming a bent portion in the lead portion.

In addition to this, effects that may be easily predicted by those skilled in the art from configurations according to the preferred embodiment of the present disclosure may be included.

### BRIEF DESCRIPTION OF THE DRAWINGS

The accompanying drawings illustrate a preferred embodiment of the present disclosure and together with the following detailed description, serve to provide a further understanding of the technical aspect of the present disclosure, and thus, the present disclosure should not be construed as being limited to the drawings.
FIG. 1 is a cross-sectional view schematically showing the inside of a battery cell.
FIG. 2 is a plan view of the first current collector plate shown in FIG. 1.
FIG. 3 is a bottom view showing a mask jig for welding and a current collector plate together according to an embodiment of the present disclosure.
FIG. 4 is a cross-sectional view taken along line A-A' of FIG. 3.
FIGS. 5 and 6 are cross-sectional views showing a mask jig for welding and a current collector plate together according to other embodiments of the present disclosure.
FIG. 7 is a cross-sectional view showing a mask jig for welding and a current collector plate together according to still another embodiment of the present disclosure.

### DETAILED DESCRIPTION

Hereinafter, preferred embodiments of the present disclosure will be described in sufficient detail with reference to the accompanying drawings to enable those having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the gist of the present disclosure is omitted, and in affixing the reference numerals to the elements in each drawing, the identical or similar reference numerals are affixed to the identical or similar elements throughout the present disclosure.

Additionally, it should be understood that the terms or words used in the present disclosure and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

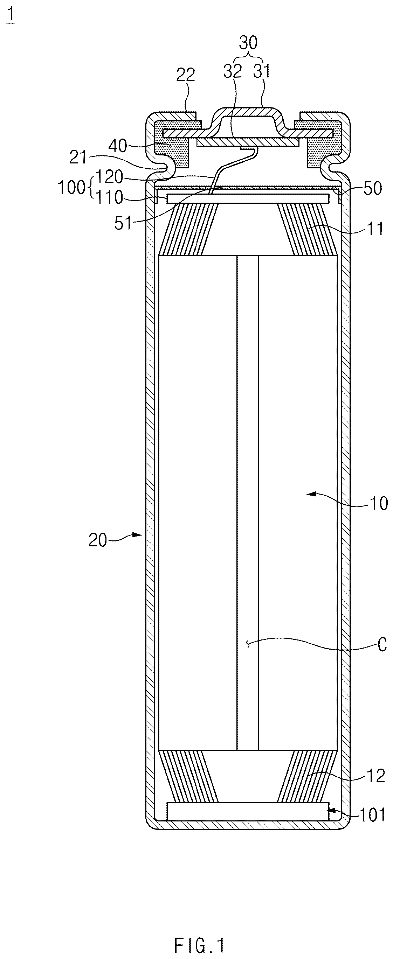

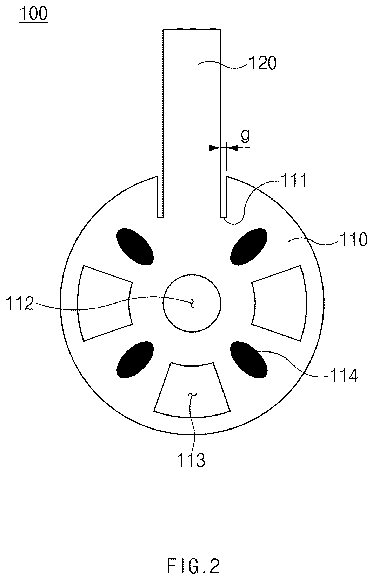

FIG. 1 is a cross-sectional view schematically showing the inside of a battery cell, and FIG. 2 is a plan view of the first current collector plate shown in FIG. 1.

The battery cell 1 may be a cylindrical secondary battery. The battery cell 1 may include an electrode assembly 10 and a battery can 20 accommodating the electrode assembly 10.

The electrode assembly 10 may include a positive electrode, a negative electrode, and a separator interposed between the positive electrode and the negative electrode. Additionally, the electrode assembly 10 may include a first electrode tab 11 connected to any one of the positive electrode and the negative electrode, and a second electrode tab 12 connected to the other one of the positive electrode and the negative electrode.

More specifically, the electrode assembly 10 may be of a jelly-roll type. The electrode assembly 10 may be manufactured by winding a stack in which a positive electrode, a separator, a negative electrode, and a separator are sequentially stacked. The electrode assembly 10 preferably has a height-to-diameter ratio of 1 or more, but is not limited thereto. A hollow C formed long in the height direction may be formed in the center portion of the electrode assembly 10. In order to insulate the electrode assembly 10 from the inner circumference of the battery can 20, a separator may be located on the outermost side of the electrode assembly 10.

The first electrode tab 11 and the second electrode tab 12 may be provided at both ends of the electrode assembly 10 in the axial direction. More specifically, the uncoated portion of any one of the positive electrode and the negative electrode may be located at one end of the electrode assembly 10 and may function as the first electrode tab 11. The uncoated portion of the other one of the positive electrode and the negative electrode may be located at the other end of the electrode assembly 10 and may function as the second electrode tab 12.

Each electrode tab 11, 12 may extend along the winding direction of the electrode assembly 10. Alternatively, each electrode tab 11, 12 may include a plurality of foil-flags disposed along the winding direction of the electrode assembly 10.

Each electrode tab 11, 12 may be bent toward the hollow C of the electrode assembly 10. The bent first electrode tab 11 may define the upper surface of the electrode assembly 10, and the bent second electrode tab 12 may define the lower surface of the electrode assembly 10.

The first current collector plate 100 may be coupled to the first electrode tab 11 in a bent state, and the second current collector plate 101 may be coupled to the second electrode tab 12 in a bent state. The electrode assembly 10 may be accommodated in the battery can 20 in a state where each current collector plate 100, 101 is coupled to each electrode tab 11, 12.

For example, the first electrode tab 11 may be an uncoated portion of the positive electrode, and the second electrode tab 12 may be an uncoated portion of the negative electrode. In this case, the first current collector plate 100 may be referred to as a positive electrode current collector plate, and the second current collector plate 101 may be referred to as a negative electrode current collector plate.

The battery can 20 may be an open cylindrical can with an opening formed at one end. Hereinafter, as shown in FIG. 1, the description will be based on the case where the opening is located at the upper side.

A bottom surface may be provided at the lower end of the battery can 20, and an opening may be formed at the upper end thereof. The electrode assembly 10 may be accommodated in the battery can 20 together with the electrolyte through the opening.

The battery can 20 may be have a conductive material such as metal. The battery can 20 may be electrically connected to the second electrode tab 12 through the second current collector plate 101. More specifically, the second current collector plate 101 may be welded to the second electrode tab 12 and the inner bottom surface of the battery can 20. Therefore, the battery can 20 may have the same polarity as the second electrode tab 12.

A beading portion 21 may be formed in the battery can 20. The beading portion 21 may be formed by pressing the circumference of the battery can 20 radially inward. The inner diameter of the beading portion 21 may be smaller than the inner diameter of the battery can 20. The beading portion 21 may be formed in a state where the electrode assembly 10 is accommodated in the battery can 20. The electrode assembly 10 may be located between the bottom surface of the battery can 20 and the beading portion 21 in the height direction of the battery can 20. The beading portion 21 may prevent the electrode assembly 10 from being separated from the opening of the battery can 20.

A crimping portion 22 may be formed in the battery can 20. The crimping portion 22 may be formed adjacent to the beading portion 21. The crimping portion 22 may be formed by bending the upper end of the circumferential surface of the battery can 20 radially inward. The inner circumference of the crimping portion 22 may define an opening of the battery can 20. The crimping portion 22, together with the beading portion 21, may constrain a gasket 40 to be described later.

The battery cell 1 may include a first current collector plate 100 that electrically connects the terminal 30 and the first electrode tab 11 of the electrode assembly 10. The battery cell 1 may include a second current collector plate 101 that electrically connects the battery can 20 and the second electrode tab 12 of the electrode assembly 10.

The battery cell 1 may include a terminal 30 having an opposite polarity to the battery can 20. The terminal 30, like the battery can 20, may have a conductive material such as metal. The terminal 30 may be insulated from the battery can 20 by the gasket 40. The terminal 30 may block the opening of the battery can 20.

The terminal 30 may be electrically connected to the first electrode tab 11 through the first current collector plate 100. More specifically, the first current collector plate 100 may be welded to the first electrode tab 11 and the terminal 30. Therefore, the terminal 30 may have the same polarity as the first electrode tab 11.

More specifically, the terminal 30 may include a terminal body 31 that is at least partially exposed to the outside of the battery can 20, and a connection portion 32 that is coupled to the terminal body 31 and connected to the first current collector plate 100.

The terminal body 31 and the connection portion 32 may be integrally provided. However, it is not limited thereto, and the terminal body 31 and the connection portion 32 may be provided as separate members and may also be coupled to each other.

The terminal body 31 may have an approximately disk shape. The center portion of the terminal body 31 may protrude upward and be exposed to the outside of the battery can 20. Preferably, the center portion of the terminal body 31 may protrude upward from the battery can 20. Therefore, an external terminal such as a busbar may be accessed to the terminal body 31 from the outside of the battery cell 1 and electrically connected thereto.

The edge portion of the terminal body 31 may be fixed and supported by the gasket 40.

The connection portion 32 may be coupled to the lower side of the terminal body 31. The connection portion 32 may be connected to the first current collector plate 100, and more specifically, to the lead portion 120 of the first current collector plate 100. The lead portion 120 may be welded to the connection portion 32.

The battery cell 1 may include the gasket 40 that insulates the battery can 20 from the terminal 30.

The gasket 40 may have an approximately ring shape. The gasket 40 may be integrally formed as shown in FIG. 1, or may include a plurality of members separated from each other.

At least a portion of the gasket 40 may be fixed between the beading portion 21 and the crimping portion 22 of the battery can 20. Additionally, the edge of the terminal 30, and more specifically, the edge of the terminal body 31, may be fixed to the gasket 40.

The polarities of the battery can 20 and the terminal 30 may be maintained to be different from each other by the gasket 40, and a short circuit may be prevented.

The battery cell 1 may include an insulator 50 that insulates the first current collector plate 100 from the battery can 20. The insulator 50 may have an approximately disk shape. The edge portion of the insulator 50 may be located between the beading portion 21 of the battery can 20 and the first current collector plate 100. Therefore, the insulator 50 may insulate the first current collector plate 100 from the beading portion 21 of the battery can 20.

The insulator 50 may include a protrusion formed to protrude from the edge of the insulator 50 in the axial direction of the electrode assembly 10. The protrusion may protrude between the inner circumference of the battery can 20 and the edge of the first current collector plate 100. Therefore, the first current collector plate 100 may be insulated from the inner circumference of the battery can 20.

An opening 51 through which the lead portion 120 of the first current collector plate 100 passes may be formed in the insulator 50. The lead portion 120 may be connected to the terminal 30, and more specifically, to the connection portion 32 through the opening 51.

Meanwhile, the first current collector plate 100 (hereinafter, 'current collector plate') may include a body 110 welded to the electrode assembly 10 and a lead portion 120 connected to the body 110.

The body 110 may be welded to the first electrode tab 11 (hereinafter, 'electrode tab'). The body 110 may have an approximately disk shape.

The lead portion 120 may extend to protrude in a radially outward direction of the body 110. The lead portion 120 has a constant width and may extend from the body 110. The body 110 and the lead portion 120 may be integrally formed.

A recessed portion 111 that is recessed in a radially inward direction from the outer circumference may be formed in the body 110. The lead portion 120 may protrude in a radially outward direction from the recessed portion 111. Therefore, the inner end of the lead portion 120 may be located inside the edge of the body 110.

A predetermined gap g may be formed between both inner edges of the recessed portion 111 and both edges of the lead portion 120. Therefore, in the process of folding the lead portion 120, interference between the lead portion 120 and the body 110 may be prevented.

A center hole 112 facing the hollow C of the electrode assembly 10 may be formed in the body 110. The diameter of the center hole 112 may be larger than the diameter of the hollow C. The center hole 112 and the hollow C may function as a passage into which a welding rod (not shown) for welding the second electrode plate 101 to the inner bottom surface of the battery can 20 is inserted.

At least one through hole 113 located outside the center hole 112 may be formed in the body 110. Preferably, the plurality of through holes 113 may be arranged along the circumferential direction of the body 110. The through hole 113 may function as a passage through which the electrolyte passes. Therefore, the impregnation of the electrolyte into the electrode assembly 10 may be improved.

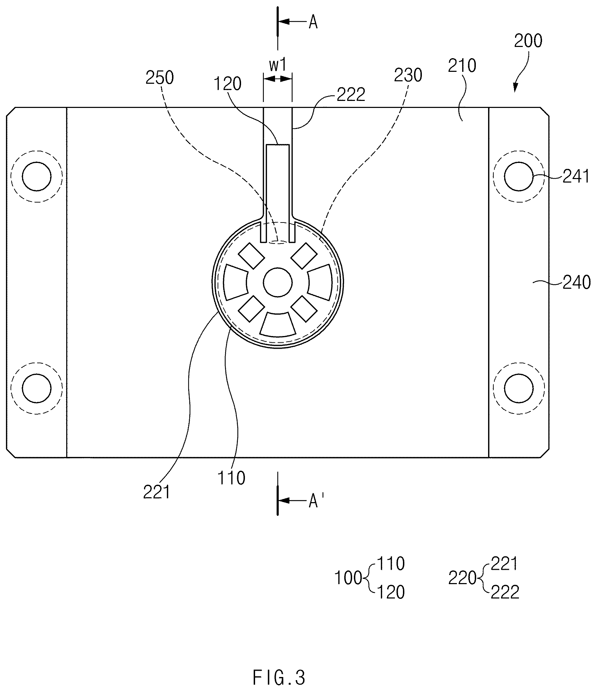

The body 110 may be provided with a welding portion 114 welded to the electrode tab 11. More specifically, the body 110 may be laser welded to the electrode tab 11 while being in close contact with the electrode tab 11 bent by the mask jig 200 (see FIG. 3) to be described later, and the welding portion 114 may be formed.

The welding portions 114 may be formed in plurality along the circumferential direction of the body 110. Some of the plurality of welding portions 114 may be located between the plurality of through holes 113 with respect to the circumferential direction of the body 110. Other parts of the plurality of welding portions 114 may be located between the recessed portion 111 and the through hole 113 with respect to the circumferential direction of the body 110.

As a result, the body 110 of the current collector plate 100 may be well welded to the electrode tab 11 as a whole. Additionally, it is possible to prevent the body 110 and the electrode tab 11 from being separated from each other in the process of bending the lead tab 120.

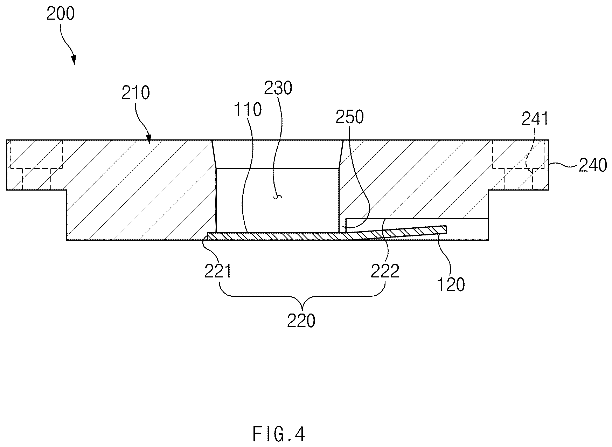

FIG. 3 is a bottom view showing a mask jig for welding and a current collector plate together according to an embodiment of the present disclosure, and FIG. 4 is a cross-sectional view taken along line A-A' of FIG. 3.

The mask jig 200 for welding (hereinafter, 'mask jig') according to an embodiment of the present disclosure may be a mask jig for laser welding the current collector plate 100 to the electrode assembly 10, and more specifically, to the electrode tab 11 of the electrode assembly 10.

The mask jig 200 may include a body 210, a receiving groove 220 recessed to a predetermined depth on one side (e.g., lower surface) of the body 210, and a through hole 230 formed through the other side (e.g., upper surface) of the body 210 to the receiving groove 220.

The body 210 may be a rigid body having a predetermined thickness. The thickness of the body 210 may be much thicker than the thickness of the current collector plate 100. The body 210 may have an approximately rectangular shape, but is not limited thereto.

Fastening portions 240 that are fastened to an external device may be provided on both sides of the body 210. The fastening portion 240 may be integrally formed with the body 210, but is not limited thereto. Each fastening portion 240 may have a plurality of fastening holes 241.

The receiving groove 220 may be recessed on one side of the body 210 to a predetermined depth. The depth of the receiving groove 220 may be the same as or similar to the thickness of the current collector plate 100. However, it is not limited thereto, and when the inner diameter of the receiving groove 220 is larger than the outer diameter of the electrode assembly 10, the depth of the receiving groove 220 may be greater than the thickness of the current collector plate 100. Alternatively, when the inner diameter of the receiving groove 220 is smaller than the outer diameter of the electrode assembly 10 and larger than the outer diameter of the current collector plate 100, the depth of the receiving groove 220 may be smaller than the thickness of the current collector plate 100. As a result, the current collector plate 100 may be brought into close contact with the inside of the receiving groove 220. The shape of the receiving groove 220 may correspond to the shape of the current collector plate 100.

More specifically, the receiving groove 220 may include a first groove 221 communicating with the through hole 230 and a second groove 222 extending radially outward from the first groove 221.

The first groove 221 may be configured to accommodate the body 110 of the current collector plate 100. The first groove 221 may have a shape corresponding to the body 110 of the current collector plate 100. The second groove 222 may be configured to accommodate the lead portion 120 of the current collector plate 100. The second groove 222 may have a shape corresponding to the lead portion 120 of the current collector plate 100.

As a result, during the welding process using the mask jig 200, the lead portion 120 of the current collector plate 100 may not interfere with the body 210 of the mask jig 200. Additionally, the mask jig 200 may bring the current collector plate 100 into close contact with the electrode assembly 10 in a state where the current collector plate 100 is accurately aligned.

The inner end of the second groove 222 may be located inside the inner circumference of the first groove 221. This may correspond to the fact that the inner end of the lead portion 120 in the current collector plate 100 is located inside the edge of the body 110. Therefore, the protrusion 250 to be described later may press the inner end of the lead portion 120.

The second groove 222, like the lead portion 120, may have a constant width W1. The width W1 of the second groove 222 may be the same as or similar to the width of the lead portion 120.

The outer end of the second groove 222 may be open. As a result, even if the length of the lead portion 120 is sufficiently long, the lead portion 120 may protrude further outward than the second groove 222 and may not interfere with the body 210 of the mask jig 200.

The through hole 230 may be formed through the other surface of the body 210 to the receiving groove 220, and more specifically, to the first groove 221. A laser unit (not shown) may form a welding portion 114 by irradiating a laser beam to the body 110 of the current collector plate 100 through the through hole 230.

The diameter of the through hole 230 may correspond to or be smaller than the diameter of the first groove 221. Preferably, a step may be formed between the inner circumference of the through hole 230 and the inner circumference of the first groove 221. Due to the step, the edge of the body 110 of the current collector plate 100 may be pressed and brought into close contact with the electrode assembly 10 side.

Meanwhile, as shown in FIG. 1, the lead portion 120 of the current collector plate 100 may be bent with respect to the body 110 and connected to the terminal 30. However, in the prior art, since a part where bending occurs in the lead portion 120 was randomly determined, there was a problem of degrading processability.

In order to solve this problem, a protrusion 250 configured to press the lead portion 120 of the current collector plate 100 may be formed in the second groove 222. More specifically, the protrusion 250 may be formed at the inner end of the second groove 222.

When the mask jig 200 brings the current collector plate 100 into close contact with the electrode assembly 10, the protrusion 250 may press the lead portion 120, and more specifically, the inner end of the lead portion 120.

The protrusion 250 may be formed to be parallel to a width of the second groove 222. That is, a bending line parallel to the width of the lead portion 120 may be formed in the lead portion 120 pressed by the protrusion 250. Therefore, the point pressed by the protrusion 250 in the lead portion 120 may be easily bent.

The length of the protrusion 250 may be more than half of the width of the second groove 222. Therefore, the bending line formed in the lead portion 120 may be formed sufficiently long, and the bending of the lead portion 120 may be performed reliably.

The end of the protrusion 250 may be located on the same plane as the inner surface of the first groove 221, or may protrude further than the inner surface of the first groove 221. As a result, the protrusion 250 may reliably press the lead portion 120 of the current collector plate 100.

In the receiving groove 220, the second groove 222 may be formed deeper than the first groove 221. Therefore, the portion of the lead portion 220 located outside the protrusion 250 may be slightly lifted within the second groove 222. That is, a bending line may be formed more reliably in the part pressed by the protrusion 250.

As a result, since the lead portion 120 may be bent at an accurate position, processability may be improved. Additionally, there is an advantage of forming a bending line in the lead portion 120 during the welding process using the mask jig 200 without a separate process of forming a bent portion in the lead portion 120.

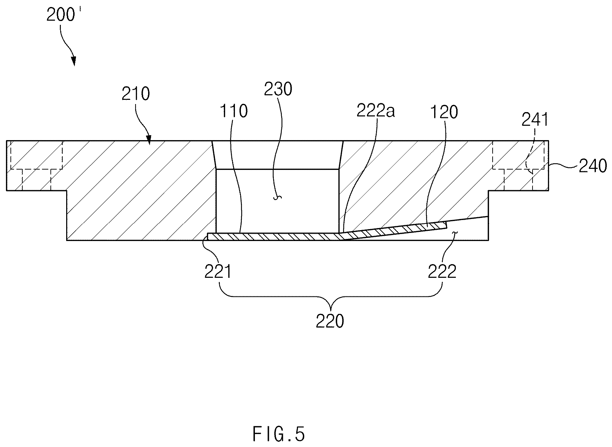

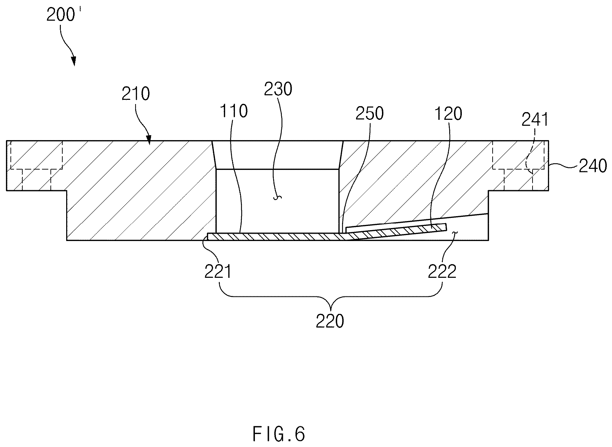

FIGS. 5 and 6 are cross-sectional views showing a mask jig for welding and a current collector plate together according to other embodiments of the present disclosure.

Hereinafter, content overlapping with the content described above will be omitted and the differences will be mainly described.

Referring to FIG. 5, the second groove 222 of the mask jig 200' according to another embodiment of the present disclosure may include a section in which its depth becomes deeper as the distance from the inner end 222a of the second groove 222 increases. That is, the inner end 222a may be the most protruding portion of the second groove 222.

In this case, even if a separate protrusion 250 (see FIG. 4) is not formed in the second groove 222, the inner end 222a of the second groove 222 may press the lead portion 220. The inner end 222a of the second groove 222 may replace the role of the protrusion 250 described above.

When the mask jig 200 brings the current collector plate 100 into close contact with the electrode assembly 10, the inner end 222a of the second groove 222 may press the lead portion 120, and more specifically, the inner end of the lead portion 120.

The inner end 222a of the second groove 222 may be located on the same plane as the inner surface of the first groove 221, or may protrude further than the inner surface of the first groove 221. As a result, the inner end 222a of the second groove 222 may reliably press the lead portion 120 of the current collector plate 100.

Since the second groove 222 includes a section in which its depth increases as the distance from the inner end 222a increases, the portion of the lead portion 220 located outside the inner end 222a of the second groove 222 may be slightly lifted within the second groove 222. That is, a bending line may be formed more reliably in the part pressed by the inner end 222a of the second groove 222.

Additionally, as in the modified example shown in FIG. 6, the second groove 222 includes a section in which its depth increases as the distance from the inner end 222a of the second groove 222 increases, and it is of course also possible for a configuration in which a protrusion 250 is added to the inner end 222a of the second groove 222.

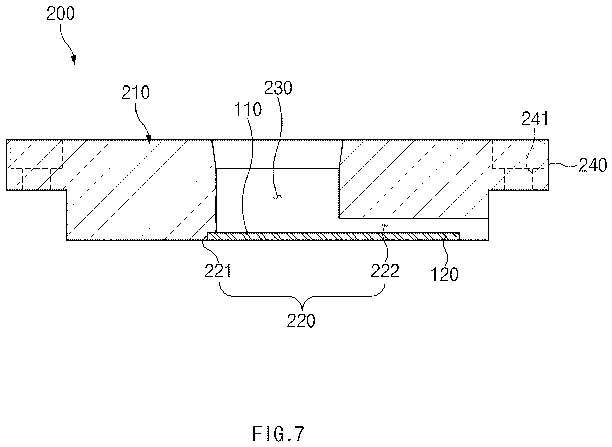

FIG. 7 is a cross-sectional view showing a mask jig for welding and a current collector plate together according to still another embodiment of the present disclosure.

Referring to FIG. 7, the mask jig 200" according to another embodiment of the present disclosure may not include a configuration (e.g., the protrusion 250 previously described) for pressing the lead portion 120 of the current collector plate 100.

In this case, a part where bending occurs in the lead portion 120 cannot be accurately determined, but instead, there is an advantage that the structure of the mask jig 200" is simplified and manufacturing is easy. Additionally, it is possible to maintain the advantage that the lead portion 120 may not interfere with the body 210 of the mask jig 200".

The above description is merely an illustrative description of the technical ideas of the present disclosure, and various modifications and variations will be possible by those having ordinary skill in the technical field pertaining to the present disclosure without departing from the essential characteristics of the present disclosure.

Therefore, the embodiments disclosed in the present disclosure are not intended to limit the technical ideas of the present disclosure, but for illustrative purposes, and the scope of the technical ideas of the present disclosure is not limited by these embodiments.

The scope of protection of the present disclosure should be interpreted in accordance with the claims below, and all technical ideas within the scope equivalent thereto should be construed as being included in the scope of the present disclosure.

### [LIST OF REFERENCE NUMERALS]

| | | | |
|---|---|---|---|
| 100: | Current collector plate | 110: | Body (of current collector plate) |
| 111: | Recessed portion | 112: | Center hole |
| 113: | Through hole | 114: | Welding portion |
| 120: | Lead portion | 200: | Mask jig for welding |
| 210: | Body | 220: | Receiving groove |
| 221: | First groove | 222: | Second groove |
| 222a: | Inner end (of second groove) | 230: | Through hole |
| 240: | Fastening portion | 250: | Protrusion |

## Claims

1. A mask jig for welding comprising:
a body;
a receiving groove recessed to a predetermined depth on one side of the body and configured to accommodate a current collector plate; and
at least one through hole formed through the other side of the body to the receiving groove and configured to allow a laser beam to enter the current collector plate located in the receiving groove,
wherein the receiving groove comprises:
a first groove communicating with the through hole; and
a second groove extending radially outward from the first groove.

2. The mask jig for welding according to claim 1,
wherein a protrusion configured to press a lead portion of the current collector plate is formed at an inner end of the second groove.

3. The mask jig for welding according to claim 2,
wherein the protrusion is formed to be parallel to a width of the second groove.

4. The mask jig for welding according to claim 3,
wherein a length of the protrusion is more than half of a width of the second groove.

5. The mask jig for welding according to claim 2,
wherein an end of the protrusion is located on the same plane as an inner surface of the first groove, or protrudes further than the inner surface of the first groove.

6. The mask jig for welding according to claim 1,
wherein an inner end of the second groove is located inside an inner circumference of the first groove.

7. The mask jig for welding according to claim 1,
wherein the first groove is configured to accommodate a body of the current collector plate welded to an electrode assembly, and
the second groove is configured to accommodate the lead portion that extends to protrude in a radially outward direction of the body of the current collector plate.

8. The mask jig for welding according to claim 1,
wherein the second groove is formed deeper than the first groove.

9. The mask jig for welding according to claim 1,
wherein the second groove comprises a section in which its depth increases as the distance from the inner end of the second groove increases.

10. The mask jig for welding according to claim 9,
wherein the inner end of the second groove is located on the same plane as an inner surface of the first groove, or protrudes further than the inner surface of the first groove.

11. The mask jig for welding according to claim 1,
wherein an outer end of the second groove is open.
